# FASCICULE DE BREVET EUROPEEN

(11) **EP 2 361 381 B1**
(45) Date de publication et mention de la délivrance du brevet: **19.04.2017**
(21) Numéro de dépôt: 09759934.4
(22) Date de dépôt: 20.11.2009
(51) Int. Cl.: G01N 29/04, G01N 29/24, G01N 15/08

(54) **PROCÉDÉ ET DISPOSITIF D'ANALYSE ACOUSTIQUE DE MICROPOROSITÉS DANS UN MATÉRIAU TEL QUE LE BÉTON À L'AIDE D'UNE PLURALITÉ DE TRANSDUCTEURS CMUTS INCORPORÉS DANS LE MATÉRIAU**
VERFAHREN UND VORRICHTUNG ZUR AKUSTISCHEN ANALYSE VON MIKROPOROSITÄTEN IN EINEM MATERIAL WIE BETON UNTER VERWENDUNG MEHRERER IN DEM MATERIAL EINGEBETTETER CMUT-WANDLER
METHOD AND DEVICE FOR THE ACOUSTIC ANALYSIS OF MICROPOROSITIES IN A MATERIAL SUCH AS CONCRETE USING A PLURALITY OF CMUT TRANSDUCERS EMBEDDED IN SAID MATERIAL

(30) Priorité: 21.11.2008 FR 0857927
(43) Date de publication de la demande: 31.08.2011
(73) Titulaire: Commissariat à l'Énergie Atomique et aux Énergies Alternatives, 75015 Paris (FR); Laboratoire Central des Ponts et Chaussées, 75732 Paris Cedex 15 (FR); Ecole Nationale des Ponts et Chaussées, 77455 Marne La Vallee Cedex 2 (FR)
(72) Inventeur: LEBENTAL, Bérengère, F-38000 Grenoble (FR); DELEVOYE, Elisabeth, 38120 SAINT EGREVE (FR); GHIS, Anne, F-38400 Saint Martin d'Heres (FR)
(74) Mandataire: Ilgart, Jean-Christophe
(86) Numéro de dépôt international: PCT/EP2009/065580
(87) Numéro de publication internationale: WO 2010/057990

(56) Documents cités:
- WO-A-2007/025172
- WO-A-2007/115283
- GB-A- 2 293 653
- US-A1- 2008 179 993
- ZHANG J ET AL: "Hydration monitoring of cement-based materials with resistivity and ultrasonic methods" MATERIALS AND STRUCTURES/MATERIAUX ET CONSTRUCTIONS JANUARY 2009 SPRINGER SCIENCE AND BUSINESS MEDIA NETHERLANDS NL, vol. 42, no. 1, 12 mars 2008 (2008-03-12), pages 15-24, XP002534795
- B. LEBENTAL, F. BOURQUIN, J. CAUSSIGNAC, L. ACAUAN, S. SANAUR, A. GHIS: "In-situ non-destructive testing of cementitious materials with embedded ultrasonic transducers made up of carbon nanotubes" 7TH INTERNATIONAL SYMPOSIUM ON NON DESTRUCTIVE TESTING IN CIVIL ENGINEERING, 30 JUNE - 3 JULY 2009, NANTES, FRANCE 3 juillet 2009 (2009-07-03), pages 1-6, XP002571705 Extrait de l'Internet: URL:http://www.ndt.net/article/ndtce2009/p apers/203.pdf> [extrait le 2010-03-05]
- CALIANO G ET AL: "Micromachined ultrasonic transducers using silicon nitride membrane fabricated in PECVD technology", PROCEEDINGS / 2000 IEEE ULTRASONICS SYMPOSIUM : OCTOBER 22 - 25, 2000, HOTEL CARIBE HILTON, SAN JUAN, PUERTO RICO ; AN INTERNATIONAL SYMPOSIUM, IEEE SERVICE CENTER, PISCATAWAY, NJ, vol. 1, 22 October 2000 (2000-10-22), pages 963-967, XP010541745, ISBN: 978-0-7803-6365-6

## Description

### DOMAINE TECHNIQUE

La présente invention concerne le domaine de la détection et l'analyse de microporosités dans des matériaux comportant plusieurs phases, dont au moins une première phase solide et au moins une deuxième phase liquide ou gazeuse, en particulier les matériaux cimentaires tel que le béton.

Elle prévoit un dispositif amélioré de détection et d'analyse de micro-porosités, et en particulier des porosités capillaires d'un matériau à plusieurs phases, dont au moins une phase fluide, à l'aide d'une pluralité d'émetteurs et de récepteurs d'ondes acoustiques incorporés dans le matériau à analyser.

L'invention trouve des applications par exemple telles que l'analyse de matériaux cimentaires.

### ÉTAT DE LA TECHNIQUE ANTÉRIEURE

Les matériaux cimentaires sont des matériaux bi-phasiques formés d'une phase fluide et d'une phase solide. La phase fluide est généralement appelée « porosité ».

Les pores peuvent avoir une dimension caractéristique qui peut être l'ordre de plusieurs dizaines d'angströms à plusieurs centimètres.

Les pores de taille de l'ordre du micromètre, également appelées « microporosités » jouent un rôle essentiel dans les propriétés macroscopiques des matériaux cimentaires.

Suivant la taille des pores on peut distinguer plusieurs classes de porosités :
1. les pores capillaires, de forme très irrégulière, et de taille comprise généralement entre 10 nm et 10 µm,
2. les pores dits « hollow-shell » (ou encore appelés « Hadley grain ») de grande taille et de formes géométriques simples (tel qu'un triangle, une forme ovoïde, ...), qui sont entourés d'un anneau à base de C-S-H, et qui résultent d'un mécanisme d'hydratation qui laisse une coquille partiellement ou entièrement vide,
3. les pores compris dans la pâte de ciment peu dense, dite « open-gel », de taille comprise entre 0,5 nm et 10 nm,
4. les pores compris dans la pâte de ciment dense, dite « dense-gel », d'un diamètre inférieur à 0,5 nm.

Les 3ème et 4ème classes forment une porosité appelée « nano-porosité ».

L'analyse de la porosité de classes 1 et 2 est particulièrement utile.

Dans les matériaux cimentaires, la porosité peut être un indicateur de réactions nocives, comme les alkali-réactions ou la carbonatation, et peut par exemple constituer un indicateur d'une éventuelle corrosion des armatures du béton.

La porosité influence le processus d'hydratation des matériaux cimentaires et leurs propriétés mécaniques. Une analyse de la structure poreuse peut permettre d'améliorer les propriétés des matériaux, que ce soit pendant le temps de vie d'un ouvrage étudié, par exemple en modifiant des paramètres de curage ou dans le but de développer de nouveaux procédés ou de nouveaux produits.

On peut déduire de l'étude de la porosité d'un matériau ses paramètres de transports macroscopiques, comme la perméabilité, ou le coefficient de diffusion des ions.

Les paramètres de transport interviennent dans la définition de la durabilité du matériau considéré, en particulier quand celui-ci est en milieu humide, comme c'est le cas pour les matériaux cimentaires.

De nombreuses techniques d'analyse de la porosité des matériaux cimentaires existent.

La porosimètrie par intrusion de mercure, est par exemple une technique dans laquelle on injecte dans une pâte de ciment du mercure sous pression croissante. En mesurant le volume introduit, on peut déduire la distribution de taille des pores dans cette pâte, par exemple en utilisant une loi dite « de Washburn ».

Cette technique comporte de nombreuses limitations : les échantillons à étudier sont préalablement séchés afin de vider les pores, ce qui peut modifier leur structure. Par ailleurs, les fortes pressions appliquées au mercure peuvent conduire à des fractures locales du matériau et rendre la porosité plus grossière. Les hypothèses de validité de la méthode (forme des pores et accessibilité) ne sont pas systématiquement remplies, ce qui introduit une erreur systématique sur tout le volume poreux : plutôt qu'à une taille de pore chaque portion de volume introduit est associée à l'ouverture la plus large qui y donne accès.

L'imagerie peut également être utilisée afin d'étudier la porosité d'un matériau. La méthode la plus courante est la microscopie électronique à balayage. Une telle méthode nécessite généralement une préparation complexe d'échantillons du matériau.

Pour être analysé l'échantillon est coupé et poli afin de présenter une surface plane. La plupart du temps, il doit aussi être séché, ce qui peut modifier la structure du matériau. Par ailleurs, les données d'imagerie obtenues sont en deux dimensions.

L'imagerie RMN peut quant à elle permettre de fournir une image en trois dimensions. Cette technique est fondée sur l'utilisation de gradients de champs magnétiques. La résolution de cette technique est actuellement insuffisante.

Une analyse par adsorption de gaz peut également être utilisée pour étudier la porosité d'un matériau.

Une telle méthode est basée sur le fait que la condensation d'un gaz est modifiée lorsque ce gaz inclus dans des pores par rapport à lorsque ce gaz est libre. Cette différence est due aux interactions des molécules de gaz avec les atomes de la surface du solide. La mesure du volume de gaz (N₂, H₂O, ...) adsorbé sur les parois des pores en fonction de la pression appliquée permet de tracer des isothermes. Moyennant des hypothèses telles que notamment le nombre de couches adsorbées, on peut évaluer la surface spécifique du matériau poreux, c'est à dire la surface par unité de masse.

Cette technique permet d'analyser la micro-et nano-porosité également appelée « porosité fine », jusqu'à quelques angströms. Cependant, elle nécessite une étape préalable de séchage qui peut être très longue et modifier la structure du matériau. De plus, les résultats obtenus dépendent en partie des conditions de préparation du matériau.

Une méthode dite « de diffusion aux petits angles » consiste, quant à elle, à analyser l'intensité d'une radiation diffusée par le matériau. Les techniques de diffusion aux petits angles utilisent généralement un rayonnement de neutrons ou un rayonnement X. La figure de diffusion donne des informations statistiques sur l'ensemble d'objets diffusants. Cette technique est non destructive et ne nécessite pas d'étape de séchage. Le spectre de leurs différentes résolutions s'étend sur un large spectre.

Cependant, la préparation les échantillons nécessite un prétraitement important qui est susceptible de perturber les résultats. La plupart des procédés basés sur cette méthode sont destructifs.

En complément de ces méthodes d'évaluation haute résolution, mais destructives, il existe des méthodes d'évaluation non destructives des structures. Ces méthodes, réalisées in situ, sont par exemple des méthodes radar ou utilisant des ondes acoustiques.

Un exemple d'une telle méthode est donné dans le document : Review of Non Destructive Testing Methods in the assessment of concrete and masonry structures, D.M. McCann, M.C. Forde dans NDT&E International 34 (2001) 71-84).

En ce qui concerne les méthodes acoustiques, il existe des méthodes d'impact, des méthodes vibratoires et des méthodes ultrasoniques.

De façon générale, ces méthodes ne dépassent pas 20 KHz de fréquence de fonctionnement, ce qui limite leur résolution à une dizaine de cm.

Des méthodes acoustiques fonctionnant à des fréquences de l'ordre de 1 MHz, soit une résolution de l'ordre de 3 mm, sont présentées dans le document « methods for multiple scattering of ultrasounds in random media », M. Chekroun et al. Numerical, mais elles sont limitées à l'analyse de structures macroscopiques en raison de leur résolution.

Le document de Zhang J. et al. : « Hydration Monitoring of Cement-based Materials with Resistivity and Ulstrasonic Methods » Materials and Structures/ Matériaux et Constructions, Janvier 2009, Springer Science and Business Media Netherlands NL, vol. 42, n°1, 12 mars 2008, pages 15-24 concerne un dispositif d'analyse de la porosité d'un matériau donné comportant plusieurs phases dont une phase fluide, le dispositif étant doté d'une pluralité de capteurs incorporés dans ledit matériau donné, les capteurs comprenant chacun un ou plusieurs transducteurs acoustiques.

L'étude de la microporosité dans les matériaux cimentaires est déterminante. Le suivi de la microstructure de tels matériaux est un indicateur de la capacité de ces matériaux à remplir leur fonction et conditionne leur durabilité.

Comme cela a été indiqué, il existe un large panel de techniques d'investigation pour connaître la microporosité.

Il se pose le problème de trouver une nouvelle méthode d'analyse de la porosité des matériaux cimentaires, qui ne comporte pas les inconvénients mentionnés ci-dessus.

### EXPOSÉ DE L'INVENTION

L'invention concerne tout d'abord un dispositif d'analyse de la microporosité d'un matériau selon la revendication 1.

Le dispositif de l'invention permet de faire un suivi de la microporosité, en particulier de la porosité capillaire, sans que les microporosités soient réparties de manière homogène dans le matériau.

Les capteurs sont dotés d'une ou plusieurs zones sensibles de dimension critique comprise entre 1 nm et 100 µm.

Les capteurs peuvent être dotés de zones sensibles de longueur et de largeur chacune inférieure à 100 µm.

Des capteurs dotés de zones sensibles ayant de telles dimensions, permettent d'effectuer des mesures dans des volumes faibles correspondant à des microporosités.

Par « zones sensibles », on entend des zones ou d'éléments destiné(e)s à vibrer, afin d'émettre et/ou de recevoir des ondes acoustiques.

Par « dimension critique », on entend la plus petite dimension de ces zones sensibles hormis leur épaisseur.

Des zone sensibles de telles dimensions permettent aux capteurs d'exciter acoustiquement les microporosités de façon individuelle.

Les transducteurs sont des transducteurs cMUTs de type capacitif (CMUT pour "Capacitive Micromachined Ultrasonic Transducer").

Une analyse des microporosités, c'est-à-dire de pores de diamètre inférieur à 100 µm peut être mise en oeuvre à l'aide d'un tel dispositif.

On peut réaliser ainsi une analyse des pores de taille de l'ordre du micromètre d'un matériau, en émettant des ondes acoustiques dans ce matériau, et en analysant des ondes acoustiques résultant de cette émission par l'intermédiaire de récepteurs cMUTS incorporés dans le matériau.

Chaque capteur comprend ainsi au moins un transducteur cMUT récepteur d'onde acoustique. Le dispositif peut comprendre en outre : une pluralité de transducteurs cMUTs émetteurs incorporés dans ledit matériau donné.

Les transducteurs cMUTS intégrés au matériau à analyser peuvent être des transducteurs fonctionnant en émetteur d'ondes acoustiques, en récepteur d'ondes acoustiques ou en émetteur/récepteur.

Selon une possibilité, les cMUTs peuvent être dotés d'au moins une membrane comprenant au moins une couche à base de nanotubes et/ou de nano-fils et/ou de nano-poutres, la membrane étant destinée à générer et/ou détecter des ondes acoustiques.

Cela peut permettre de mettre en oeuvre un dispositif avec une membrane répondant à la fois à un critère de faibles dimensions en termes de surface et d'épaisseur, et un critère de fonctionnement puisqu'il fonctionne à une fréquence élevée.

Les transducteurs émetteurs peuvent être prévus pour émettre des impulsions acoustiques dans une gamme de fréquences comprise entre 20 kHz et 100 GHz, en particulier entre 100 MHz et 10 GHz.

Une telle gamme est adaptée en particulier pour l'analyse de microporosités ou de pores de taille de l'ordre d'une dizaine de nanomètre à une dizaine de micromètres.

Les transducteurs peuvent comporter une ou plusieurs membranes destinées à osciller sous l'effet d'un champ électrique et/ou d'une onde acoustique, la membrane ou les membranes étant formée(s) d'une ou plusieurs couches de nanotubes et/ou de nano-fils et/ou de nano-poutres.

Le dispositif peut comprendre en outre une pluralité de supports des capteurs incorporés dans ledit matériau donné, les capteurs reposant chacun sur un support comportant au moins un circuit électronique de traitement de signaux issus d'au moins un capteur.

Un tel circuit peut comprendre par exemple au moins un étage ou module d'amplification.

Un tel circuit peut éventuellement comprendre par exemple au moins un étage ou module de filtrage.

Les supports des capteurs peuvent comprendre chacun une matrice de transducteur cMUTS et/ou plusieurs capteurs de types différents, dont au moins un transducteur cMUT.

Selon une possibilité de mise en oeuvre, les capteurs peuvent comprendre une alimentation intégrée et/ou être alimentés par l'intermédiaire de moyens d'alimentation extérieurs audit matériau.

Selon une mise en oeuvre possible, les capteurs peuvent comprendre des moyens pour émettre des signaux vers l'extérieur du matériau, le dispositif comprenant en outre un dispositif de traitement de données extérieur au matériau et relié aux capteurs par l'intermédiaire de liaisons RF et/ou filaires.

Selon une possibilité de mise en oeuvre, les capteurs peuvent être recouverts d'une enveloppe protectrice.

Selon une possibilité, les capteurs peuvent être protégés par une enveloppe protectrice formée d'au moins une couche de protection permanente, à base d'un matériau stable en milieu basique ou acide.

La couche de protection permanente peut recouvrir partiellement les capteurs de sorte qu'au moins ladite zone sensible n'est pas recouverte par la couche de protection permanente.

Une enveloppe protectrice formée d'une première couche protectrice, permanente, et d'une deuxième couche protectrice, provisoire, et à base d'un deuxième matériau, par exemple un matériau susceptible d'être dégradé après incorporation du capteur dans le matériau à étudier, peut être prévue.

L'enveloppe protectrice peut être prévue de sorte que la ou les zones sensibles des capteurs, c'est-à-dire la zone ou les zones, destinée(s) à émettre et/ou recevoir des ondes acoustiques, par exemple une ou plusieurs membranes, ne sont recouvertes que par la deuxième couche protectrice, de sorte que la ou les zones sensibles soient ainsi directement en contact avec le matériau à étudier après dégradation de la deuxième couche protectrice.

L'invention concerne également un procédé d'analyse de la microporosité d'un matériau selon la revendication 13.

Une analyse des microporosités, c'est-à-dire de pores de diamètre inférieur à 100 µm est mise en oeuvre.

Préalablement à la mesure, les capteurs peuvent être répartis aléatoirement dans ledit matériau donné lorsque ce dernier est dans un état au moins partiellement liquide, la mesure étant effectuée après solidification au moins partielle dudit matériau donné.

Lors de cette répartition, un ou plusieurs capteurs peuvent être protégés par une enveloppe protectrice formée d'au moins une couche de protection permanente, ladite enveloppe protectrice étant formée d'au moins une autre couche de protection temporaire, destinée à être dégradée progressivement après incorporation dans ledit matériau donné.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1, donne un exemple de capteur MEMS encapsulé dans un matériau cimentaire et appartenant à un dispositif d'analyse de la micro-porosité dudit matériau,
- la figure 2 illustre un exemple de support d'un capteur susceptible d'être utilisé au sein d'un dispositif d'analyse de la micro-porosité d'un matériau,
- les figures 3A-3D illustrent différents exemples d'agencements d'un capteur susceptible d'être utilisé au sein d'un dispositif suivant l'invention, d'analyse de la micro-porosité d'un matériau,
- les figures 4A, 4B, 4C, 4D illustrent des exemples de cellules cMUT fonctionnant respectivement, en émetteur, ou en récepteur, ou en émetteur-récepteur,
- la figure 5, illustre un exemple de fonctionnement impulsionnel d'un dispositif transducteur cMUT au sein d'un dispositif suivant l'invention,
- les figures 6A-6D donnent différents agencements de la zone active d'un capteur d'un dispositif d'analyse de la micro-porosité d'un matériau suivant l'invention,
- la figure 7 illustre sous forme d'un organigramme, des étapes d'un procédé de mise en oeuvre d'un dispositif d'analyse de la micro-porosité d'un matériau cimentaire,
- la figure 8 illustre un transducteur cMUT prévu pour l'analyse de la micro-porosité d'un matériau, et qui est encapsulé dans une enveloppe protectrice formée d'une couche polymère de protection temporaire recouvrant une autre couche de polymère destinée à protéger le transducteur cMUT pendant sa durée de vie,
- la figure 9 : illustre un exemple de transducteur cMUT doté d'une membrane oscillante formée de nano-tubes et/ou nanofils et/ou anno-poutres.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

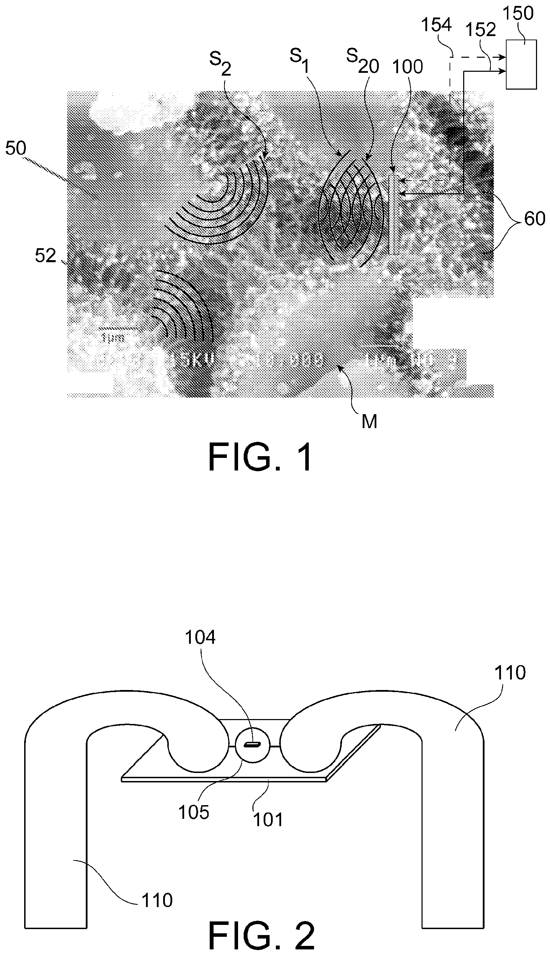

Un exemple de dispositif d'analyse des micro-porosités d'un matériau à plusieurs phases, est donné sur la figure 1.

Le matériau étudié est un matériau bi-phasique dans lequel des capteurs MEMS (MEMS pour « Micro Electro mechanical Systems ») ou NEMS (NEMS pour « Nano Electro Mechanical Systems ») sont incorporés, les capteurs ayant été introduits sans destruction de ce matériau.

Les capteurs ont été introduits dans le matériau, par exemple lorsque ce dernier se trouvait sous une forme globalement liquide, préalablement à une solidification de ce dernier. Par exemple, dans le cas d'un matériau cimentaire, les capteurs sont répartis de manière aléatoire lorsque ce dernier est sous forme liquide, avant qu'il ne se solidifie.

Le matériau étudié est un matériau bi-phasique ou à au moins deux phases, comportant au moins une phase solide et au moins une phase liquide ou gazeuse, dont au moins une fraction de la porosité a des dimensions caractéristiques comprises entre une dizaine de nanomètres et une centaine de microns, cette porosité pouvant être remplie de gaz ou de liquide.

Le matériau étudié peut être un matériau cimentaire tel que le ciment, le béton, un matériau asphalte, ou un matériau de construction composite comportant au moins deux phases, ou du plâtre.

Dans l'exemple de la figure 1, une portion de matériau cimentaire comportant des grains de ciment 50 non hydratés, des sites 52 à base de C-S-H (CAO-SIO₂-H₂O), et des micro-porosités 60 est représentée.

Cette portion de matériau comprend un capteur 100 MEMS (MEMS pour « Micro Electro Mechanical Systems ») ou NEMS (NEMS pour « Nano Electro Mechanical Systems ») incorporé parmi plusieurs capteurs intégrés audit matériau.

Dans cet exemple, le capteur comporte une partie émettrice d'ondes acoustiques S1, ou au moins un élément émetteur d'ondes acoustiques S1, ainsi qu'une partie réceptrice ou au moins un élément récepteur d'ondes acoustiques. Sur cette figure, certaines ondes S20 parmi les ondes réfléchies S2 suite à l'émission d'ondes S1 par le capteur sont représentées.

Le capteur 100 comporte au moins une zone sensible, c'est-à-dire une zones ou un élément destiné(e)s à vibrer, afin d'émettre et/ou de recevoir des ondes acoustiques. La zone sensible peut être sous forme d'une membrane.

Le capteur 100 peut comprendre au moins une zone sensible de dimensions, c'est-à-dire de longueur et de largeur, chacune comprise entre 1 nm et 100 µm. Des capteurs dotés de zones sensibles ayant de telles dimensions, permettent d'effectuer des mesures dans des volumes faibles, en particulier correspondant à des micro-porosités. Plus particulièrement, à partir de l'ensemble des mesures de ces capteurs fournissent, il est possible de déduire des informations statistiques sur la morphologie de la micro-porosité.

Le capteur 100 peut comprendre par exemple un ou plusieurs transducteur(s) ultrasonore(s) de type capacitif communément appelés transducteurs cMUT (cMUT pour « Capacitive Micromachined Ultrasonic Transducer »), le ou les transducteurs pouvant jouer le rôle d'émetteur d'ondes acoustiques, ou de récepteur d'ondes acoustiques, ou d'émetteur-récepteur d'ondes acoustiques.

Dans le cas d'un capteur 100 doté d'un ou plusieurs transducteur(s) électro-acoustique(s) de type capacitif cMUT, la zone active est sous forme d'une ou plusieurs membranes vibrantes.

Un nombre élevé de micro-capteurs ou de nano-capteurs peut avoir été dispersé dans le matériau à analyser lors de la fabrication de ce dernier, par exemple une densité comprise entre 0,1 et 0,0001 selon les propriétés du capteur et du matériau, par exemple de l'ordre de 0,01. Les micro-capteurs ou nano-capteurs peuvent être dispersés par exemple dans du ciment préalablement à sa solidification.

Une analyse statistique des informations issues des capteurs peut être effectuée, par exemple à l'aide d'un dispositif de traitement 150 de données extérieur au matériau et susceptible de communiquer avec les capteurs à l'aide d'au moins une liaison filaire 152 et/ou d'au moins une liaison sans fil 154 (figure 1).

Les capteurs peuvent être interrogés, par exemple de manière ponctuelle ou de manière périodique, la fréquence d'interrogation des capteurs pouvant être modifiée au cours de leur durée de vie.

Une interrogation simultanée de tous les capteurs, ou une interrogation simultanée d'une partie des capteurs ou une interrogation individuelle de chaque capteur peuvent être effectuées.

L'initialisation d'un capteur peut être réalisée par exemple par émission d'un signal de déclenchement ou signal dit « ON », pendant une durée donnée, qui permet d'initialiser un capteur qui le reçoit. Des signaux modulés peuvent être émis au niveau de l'électrode d'un cMUT.

Une émission en continu, ou périodique ou ponctuelle, ou une alternance des modes précités, peut être mise en oeuvre par chaque capteur, afin de transmettre tout ou partie des informations collectées à un dispositif extérieur.

Une émission d'informations peut être par exemple contrôlée par une horloge associée au capteur. Une émission ponctuelle peut, par exemple, être effectuée suite à un changement de l'environnement du capteur ayant provoqué un déclenchement de ce dernier, par exemple lorsqu'une grandeur physique mesurée est devenue supérieure à une valeur seuil.

La détection par le capteur de son environnement peut être effectuée de manière continue, ou de manière périodique ou de manière ponctuelle ou selon une alternance des modes précités.

Une détection peut être déclenchée par le capteur lui-même ou par le dispositif externe de traitement.

Parmi les taches susceptibles d'être effectués par le dispositif de traitement 150 externe peuvent figurer des opérations de mise en mémoire, de localisation du capteur émetteur, d'analyse spectrale, de comparaison à des valeur seuils, d'analyse du bruit issu des capteurs, de traitements statistiques des données provenant des capteurs, par exemple de calcul de moyenne, de calcul écart type, d'analyse d'erreurs.

Un tel dispositif de traitement, peut comprendre par exemple un ordinateur PC muni d'une interface homme machine et d'une carte d'acquisition. Pour un mode de fonctionnement dans lequel le dispositif externe et les capteurs sont reliés par une liaison filaire, l'ordinateur PC peut être connectée par un connecteur USB ou GPIB (bus IEEE 488) ou RS232 à une carte sur laquelle sont connectés des fils de connexion reliés aux capteurs.

Le capteur 100 peut être alimenté par exemple à l'aide d'une liaison, par exemple une liaison sans fil, depuis l'extérieur du matériau, et/ou peut éventuellement comprendre une alimentation intégrée.

Le capteur 100 peut comprendre des moyens de traitement des signaux reçus par le ou les transducteurs capacitifs cMUT. Des tels moyens de traitement peuvent être par exemple, prévus pour effectuer une analyse spectrale du signal, une comparaison à des valeurs seuil, des opérations de stockage/mémorisation.

Le ou les MEMS/NEMS du capteur, en particulier le ou les transducteurs cMUTs du capteur, forme(nt) une zone active dont les dimensions caractéristiques définissent l'ordre de grandeur de la plus petite dimension de micro-porosité observable par le capteur. Pour un capteur cMUT de zone active de l'ordre de 1 µm², la plus petite dimension caractéristique de porosité observable peut être par exemple de l'ordre de 500 nm.

La zone active 104 (capteur MEMS ou NEMS) et son électronique de contrôle 105 peuvent être disposées sur un même support 101, par exemple en un support en silicium ou oxyde de silicium éventuellement recouvert d'une couche de protection, par exemple à base de polymère, et située aux endroits où le support est susceptible d'être en contact avec le matériau à étudier.

Selon une possibilité (figure 2), les composants situés sur le support 101 peuvent éventuellement être reliés à un dispositif extérieur au matériau, à l'aide de fils d'or 110. Les fils d'or 110 peuvent être directement reliés au dispositif extérieur ou peuvent être reliés à des câbles coaxiaux (non représentés) qui guident des signaux électriques de mesure vers l'extérieur du matériau et sont traités à l'aide du dispositif électronique de traitement 150.

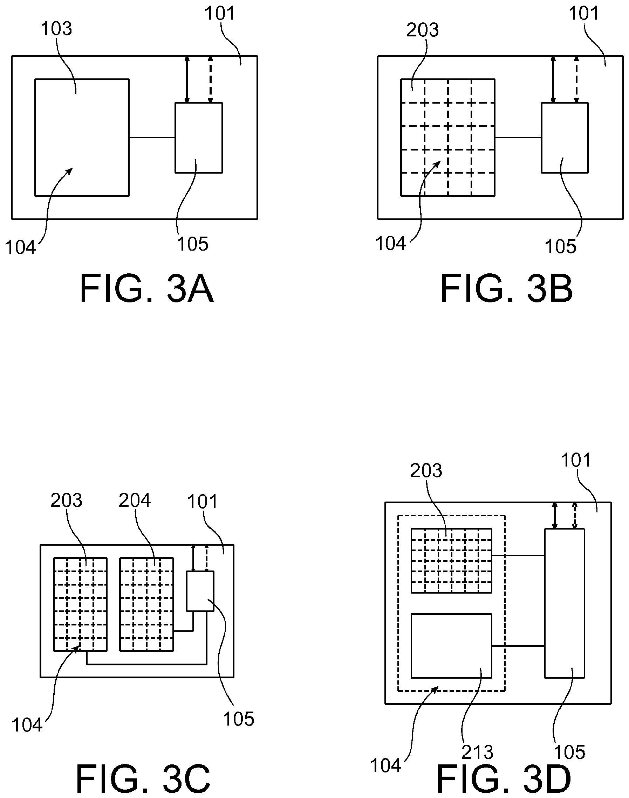

Sur la figure 3A, la zone active 104 est formée d'un transducteur 103 acoustique de type capacitif cMUT sous forme de MEMS ou de NEMS sur son support 101.

Selon une variante, les capteurs peuvent comporter une zone active 104 formée de plusieurs transducteurs cMUTs identiques 203 répartis sur le support 101 et agencés sous forme d'une matrice de transducteurs (figure 3B).

Selon une autre possibilité, plusieurs zones actives 104, 204, formées chacune d'un transducteur cMUT ou d'une matrice de transducteurs cMUT 203 peuvent être prévues sur un même support 101 (figure 3C).

Sur la figure 3D, plusieurs capteurs de type différents sont formés sur le même support 101 avec par exemple au moins un transducteur ultrasonore cMUT ou une matrice de transducteurs cMUTs 203, et au moins un autre capteur 213.

Sur un même support 101, un transducteur cMUT ou une matrice de transducteurs cMUT peut être associé(e) à un ou plusieurs capteurs parmi les capteurs suivants : capteur de température, capteur de viscosité, capteur d'humidité, capteur de pression.

Les capteurs incorporés dans le matériau cimentaire tels que le capteur 100 décrit précédemment comprennent chacun au moins un transducteur cMUT pouvant jouer le rôle d'émetteur d'ondes acoustiques, ou de récepteur d'ondes acoustiques et/ou d'émetteur récepteur d'ondes acoustiques.

Sur les figures 3A, 3B, 3C, 3D, le support 101 du ou des transducteurs comporte également des moyens 105 ou un circuit 105 de traitement des signaux issus du capteur. Ce circuit 105 ou ces moyens 105 peut ou peuvent comprendre des moyens d'amplification de signaux issus des transducteurs, et éventuellement un ou plusieurs autres modules de traitement de signaux, par exemple un module de filtrage. Ce circuit 105 ou ces moyens 105 peuvent comprendre des moyens pour transmettre des signaux vers l'extérieur du matériau, par exemple au moins un module RF.

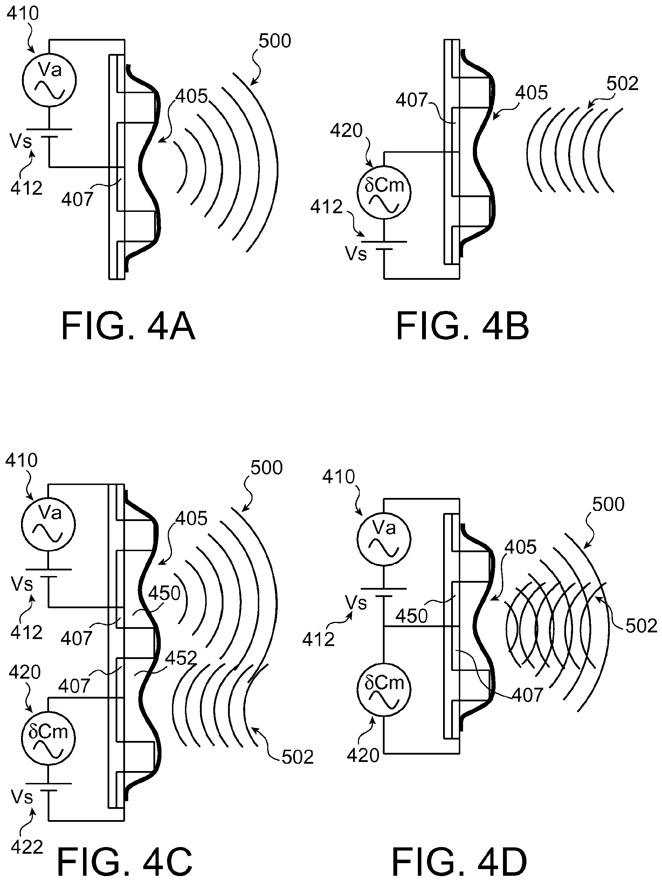

Sur la figure 4A, un transducteur cMUT susceptible d'être intégré à un capteur d'un dispositif d'analyse de micro-porosités suivant l'invention, est donné. Ce transducteur fonctionne en émetteur d'onde acoustique 500 et comporte une membrane 405 destinée à vibrer dans une cavité 410 en regard d'une électrode 407. Le dispositif est également doté de moyens 410 pour appliquer un potentiel variable Va sur l'électrode 407, et de moyens 412 pour appliquer un potentiel fixe Vs sur la membrane 405.

Sur la figure 4B, un transducteur cMUT, susceptible d'être intégré à un capteur d'un dispositif d'analyse de micro-porosité suivant l'invention, est également représenté. Le transducteur fonctionne en récepteur d'onde acoustique 502 et comporte une membrane 405, ainsi que des moyens 412 pour appliquer un potentiel fixe Vs sur l'électrode 407, et des moyens 420 formant un capacimètre, pour mesurer une variation de capacité δCm représentative des ondes reçues par la membrane 405.

Un autre exemple de transducteur cMUT, susceptible d'être intégré à un capteur du type de celui décrit précédemment en liaison avec la figure 1, est donné sur la figure 4C. Le transducteur fonctionne en émetteur-récepteur et comporte une membrane 405 suspendue au dessus d'une première cavité 450 et d'une deuxième cavité 452. La première cavité 450 appartient à la partie émettrice du transducteur. Le transducteur cMUT comporte également des moyens 410 pour appliquer un potentiel variable Va sur la membrane 405, et des moyens 412 pour appliquer un potentiel fixe Vs sur l'électrode 407. La deuxième cavité 452 appartient à la partie réceptrice du transducteur. Le transducteur comporte également des moyens 412 pour appliquer un potentiel fixe Vs sur une deuxième électrode 407, et des moyens 420 pour mesurer une variation de capacité δCm de la membrane 405, connectés à la deuxième électrode 407.

Un autre exemple transducteur cMUT est donné sur la figure 4D. Ce transducteur est susceptible d'être intégré à un capteur du type de celui décrit précédemment en liaison avec la figure 1, et fonctionne en émetteur-récepteur. Le transducteur comporte une membrane 405 et une seule cavité 410 pour jouer le rôle à la fois d'émetteur et de récepteur. Le transducteur cMUT comporte également des moyens 412 pour appliquer un potentiel fixe Vs sur une électrode 407, et des moyens 420 pour mesurer une variation de capacité δCm de la membrane 405, connectés à l'électrode 107.

La membrane des transducteurs qui viennent d'être décrits peut être formée d'une ou plusieurs couches de nanotubes (ou de nano-fils ou de nano-poutres) juxtaposés.

Les nano-tubes ou de nano-fils ou nano-poutres ont la forme de barreaux de dimension critique comprise par exemple entre 0.5 nanomètre et 5 micromètres.

Les nano-tubes ont une forme tubulaire, tandis que les nano-fils peuvent avoir une forme cylindrique et que les nano-poutres peuvent avoir une forme parallélépipédique.

Les nano-tubes ou nano-fils ou nano-poutres peuvent être éventuellement associées à une ou plusieurs couches dites « de liaison » accolé(e)s aux nanotubes ou au nanofils, et destiné (e) s à lier les nanotubes et servir à assurer une étanchéité de la membrane. Une telle couche de liaison peut être par exemple à base de graphène.

Une telle membrane peut permettre de réaliser un transducteur cMUT de taille très faible et qui est susceptible de fonctionner à des fréquences élevées par rapport à la taille et aux fréquences d'un transducteur usuel. La membrane peut avoir par exemple une largeur et une longueur comprises chacune entre 1 nanomètre et 100 micromètres.

En fonction de la gamme de l'application prévue, la zone active des capteurs, peut être rendue hydrophile, par exemple par fonctionnalisation de groupement COOH.

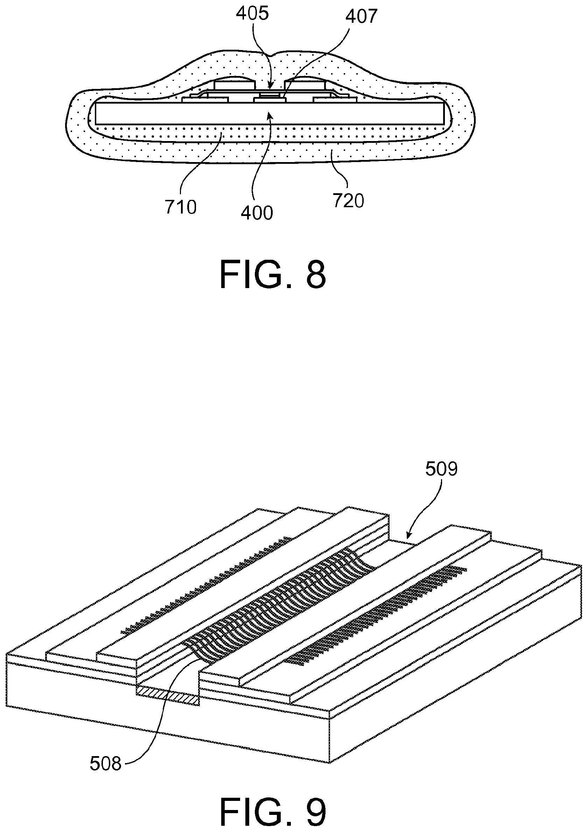

Un exemple de transducteur cMUT comprenant une membrane 505 formée de nano-tubes 508 juxtaposés, est donné sur la figure 9.

Selon une variante, la zone active des capteurs, peut être rendue hydrophobe, par exemple par électro-polymérisation avec un polymère hydrophobe.

Dans un cas où la zone active est rendue hydrophile ou hydrophobe, on effectue également un traitement identique sur les électrodes du capteur, en particulier sur la ou les électrodes situées en regard de la membrane.

Suite à l'émission d'ondes acoustiques 500, une mesure du temps de retour d'échos à l'émetteur permet de localiser une zone réfléchissante des ondes et l'analyse fréquentielle de ces échos permet d'identifier la nature des zones du matériau traversées par ces ondes.

Afin de détecter des micro-porosités, c'est-à-dire des pores de tailles de l'ordre du micromètre, les transducteurs du dispositif peuvent être prévus pour émettre des impulsions acoustiques dans une gamme de fréquences comprise entre 20 kHz et 50 MHz ou entre 50 MHz et 100 GHz.

Une matrice d'émetteurs ou de récepteurs ou d'émetteurs/récepteurs tels que décrits précédemment et commandés de façon indépendante par un matriçage actif à base de transistors peut être réalisé.

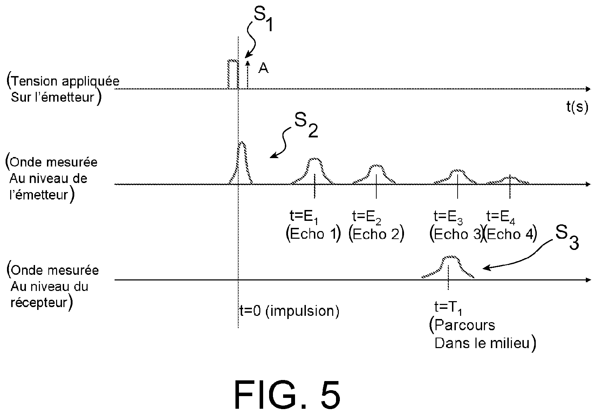

Le transducteur cMUT peut avoir un mode de fonctionnement impulsionnel (figure 5).

En mode impulsionnel, à l'aide d'une impulsion de tension (signal S1) appliquée sur l'émetteur, l'émetteur peut émettre une onde acoustique sous forme d'impulsion (Signal S2) dont l'étalement temporel dépend de la bande passante de l'émetteur et du milieu environnant. Par exemple, lorsque l'émetteur se trouve dans une zone aqueuse de la micro-porosité, l'étalement temporel du signal S2 peut être important dans la mesure où le milieu coupe les hautes fréquences, tandis que dans une zone d'air, l'étalement temporel du signal S2 est négligeable.

Par exemple, selon la dimension L du pore faisant face au capteur, certaines fréquences f (f=C_{fluide}/L) de l'impulsion seront également amplifiées L'impulsion S2 se propage dans le milieu et atteint le récepteur à la distance d au bout d'un temps T₁ (T₁=d/C_{fluide}, avec C_{fluide} la vitesse du son dans le milieu). L'analyse fréquentielle d'un signal S3 reçu et sa comparaison avec le signal S2 émis permet en une seule fois de déterminer la fonction de transfert du milieu pour les fréquences présentes dans le spectre de l'émetteur et du récepteur. L'impulsion S2 peut être partiellement réfléchie par le milieu, ce qui peut se traduire au niveau du récepteur par des échos successifs. Le temps de retour des échos à l'émetteur permet de localiser la zone réfléchissante et leur analyse fréquentielle d'analyser la nature des interfaces traversées par l'impulsion S2. La micro-porosité du matériau peut être ainsi analysée.

Le temps de retour de chaque écho peut par exemple donner une estimation de la distance à laquelle l'obstacle qui l'a créé se trouve de l'émetteur. Le spectre peut renseigner sur la nature de l'obstacle, par exemple la rugosité. L'amplitude peut renseigner sur le facteur d'amortissement.

Selon une possibilité de mise en oeuvre du dispositif, d'autres capteurs peuvent être ajoutés au transducteur cMUT ou à la matrice de transducteur cMUT sur le support 101. Un capteur de pression par exemple tel que décrit dans le document : Micromachined pressure sensors : review and recent developments de W. P. Eaton et al, 1997, Smart Mater. Struct. 6 pages 530-539, peut être par exemple disposé sur le même support 101 que le transducteur cMUT.

Selon d'autre possibilités, un capteur de flux du type tel que décrit dans le document : MEMS flow sensors for nanofluidic applications, de Shuyun Wu, Sensors and Actuators A: Physical Vol 89, No 1-2, March 2001, pages 152-158, ou un capteur d'humidité du type tel que décrit dans le document : MEMS based humidity sensors for signal drift compensation, de Chia-Yen Lee dans Sensors, 2003. Proc. of IEEE, Oct. 2003, Vol 1, pages 384-388 et dans J. Micromech. Microeng. vol. 13, 2003, pages 620-627, et/ou un capteur de viscosité tel que décrit dans le document : MEMS sensors for density-viscosity sensing in a low flow microfluidic environment, Isabelle Etchart, Sensors and Actuators A: Physical, Vol 141, No 2, Feb. 2008, pages 266-275, et/ou un capteur de température peut (peuvent) être intégré (s) sur le même support 101 que le ou les transducteurs cMUTS.

Les informations récupérées par chacun des capteurs MEMS ou NEMS du dispositif sont traitées de manière statistique par le dispositif 150 pour remonter à une information globale sur la micro-porosité du matériau, par exemple une information sur le volume poreux, la répartition de taille des pores, par exemple une information relative au contenu en liquide (par exemple en eau), une éventuelle saturation en liquide (par exemple en eau) des pores, une information relative à la structure des parois telle que par exemple, pour le béton, l'épaisseur de CSH, la densité de CSH (CSH pour CAO-SIO₂-H₂O), la rugosité, la connectivité du milieu.

Les différents capteurs peuvent donner des informations de résolution micrométrique sur les pores et leur contenu, à leur voisinage.

Les informations obtenues par un capteur du dispositif peuvent être locales, i.e. concernant uniquement la région du matériau directement voisine de la zone active du capteur avec un volume étudié par le capteur correspondant à la surface de la zone active du capteur multiplié par une faible épaisseur dépendant du capteur et du paramètre mesuré, par exemple comprise entre 1 angström et 100 nm.

Les informations obtenues par un capteur du dispositif peuvent également être distantes, c'est-à-dire, concerner un volume V de la micro-porosité. Par exemple, la fréquence de résonance d'un capteur de viscosité dépend du fluide qui l'entoure, mais aussi du domaine fluide qui lui fait face.

Le capteur 100 est susceptible d'analyser :
- une phase fluide, indépendamment de la matrice solide voisine,
- une phase fluide dans son rapport à une phase solide, par exemple lorsque le capteur comporte au moins un transducteur cMUT utilisé dans un mode impulsionnel pour lequel il détecte les échos faisant suite à des signaux qu'il a émis, afin par exemple de définir une distance entre le capteur et une interface fluide-solide.

Dans le cas d'une mesure locale, des grandeurs telles que la température, la pression, l'humidité, le flux au voisinage du capteur peuvent être mesurées.

Dans le cas d'une mesure à distance : une mesure de viscosité moyenne du contenu d'un pore qui fait face au capteur, une mesure d'un volume poreux proche du capteur, contenu et dimensions de la porosité face au capteur, nature des interfaces fluide-solide, diamètres des canaux de connexion entre pores peuvent être également effectuées.

Les capteurs sont répartis aléatoirement dans le matériau.

L'environnement du capteur peut avoir plusieurs formes.

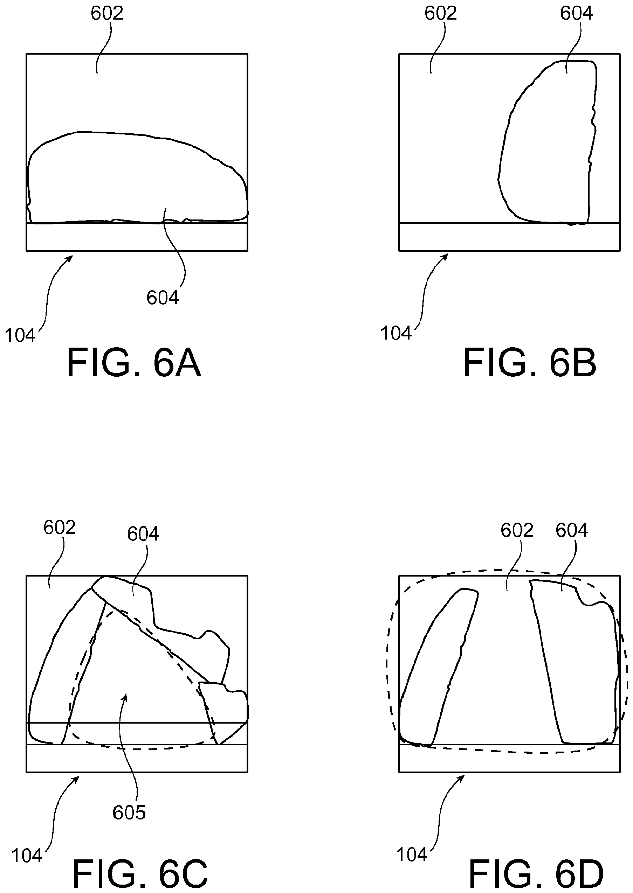

Sur les figures 6A-6D, quatre possibilités d'environnement du capteur sont données :
Sur la figure 6A, la zone active 104 du capteur est en regard de la phase solide 604 du matériau.
Sur la figure 6B, la zone active 104 du capteur est en regard partiellement de la phase solide 604, et partiellement de la phase liquide 602.
Sur la figure 6C, la zone active 104 du capteur est en regard de la phase liquide 602 sous forme d'un pore fermé 605 ou non-connecté.
Sur la figure 6D, la zone active 104 du capteur est en regard de la phase liquide sous forme d'un pore ouvert 606.

Chaque capteur est positionné aléatoirement dans le matériau et explore un volume donné de la porosité et mesure au moins un paramètre dans ce volume.

Si le matériau considéré est homogène, l'ensemble des valeurs mesurées par tous les capteurs pour ce paramètre microscopique constitue un échantillonnage de ce paramètre microscopique. On peut en déduire une loi de variation du paramètre microscopique mesuré, et obtenir des données statistiques telles que, par exemple, une moyenne, une variance.

Le nombre de capteurs nécessaire peut être adapté en fonction du degré de désordre du matériau.

Dans le cas où le matériau est hétérogène, si l'on a une estimation d'une l'échelle L, (avec L qui peut correspondre par exemple à une distance entre des armatures d'un pont et l'extérieur, ou par exemple à une distance entre des armatures d'un ouvrage, ou par exemple à une distance entre deux piles d'un pont, ou à une distance de pénétration d'ions dans une structure de béton) de variations des propriétés macroscopiques de la structure du matériau, on peut se ramener à la situation d'un matériau homogène.

Pour déterminer une loi d'un paramètre microscopique en un point M (x,y,z) du matériau étudié, on peut échantillonner cette loi à partir des mesures données par des capteurs situés dans une boule de rayon r « L autour du point M. La précision de l'estimation de la loi du paramètre au point M dépend du nombre de capteurs dans la boule de rayon r. Pour obtenir la même précision que dans le cas d'un matériau homogène, la densité de capteurs peut être multipliée par (D/r)³, avec D la dimension caractéristique du matériau étudié, D désignant l'échelle d'homogénéisation du matériau associée à la grandeur mesurée.

On peut prévoir de maximiser r, en gardant r tel que r << L.

Ensuite, la méthode peut être itérée à des instants ultérieurs pour suivre les évolutions de la microstructure.

L'invention peut éventuellement s'appliquer à d'autres matériaux bi-phasiques que les matériaux cimentaires, éventuellement à des matériaux poreux : céramiques, polymères.

La micro-porosité de céramiques hydroxyapatites utilisées dans le domaine médical pour la reconstitution des os peut être par exemple étudiée.

D'autres types de céramiques peuvent également être analysés.

Des céramiques poreuses utilisées par exemple dans les pots catalytiques de voiture, des polymères poreux utilisés entre autres dans les matériaux biomédicaux, des matériaux bi-phasiques utilisés pour de l'isolation thermique, dans des textiles, dans des substrats catalytiques, peuvent être également analysés à l'aide d'un dispositif et d'un procédé suivant l'invention.

En ce qui concerne les matériaux composites, des matériaux plastiques par exemple tel que le GFRP (glass reinforced plastic), CFRP (carbon reinforced plastic) ou le AFRP (aramid fiber reinforced plastic) peuvent être également analysés.

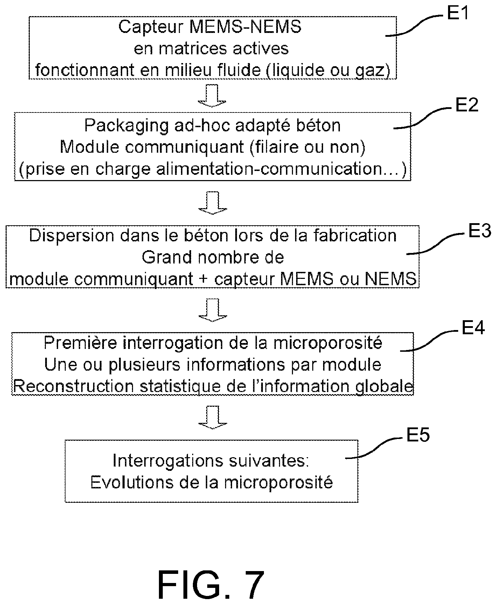

Sur la figure 7, différentes étapes de mise en oeuvre puis d'utilisation d'un dispositif d'analyse de microporosités sont données sous forme d'un diagramme.

On réalise tout d'abord (étape E1) un capteur NEMS ou MEMS comprenant un ou plusieurs transducteur cMUT et tel que décrit précédemment.

Ensuite (étape E2), on réalise une encapsulation du capteur adaptée au matériau à étudier.

Puis (étape E3), on disperse une pluralité de capteurs dans le matériau à étudier sous forme liquide, préalablement à sa solidification.

Ensuite (étape E4), on interroge les capteurs incorporés dans le matériau afin de réaliser une reconstruction statistique de la porosité du matériau.

Plusieurs interrogations des capteurs (étapes E5) sont ensuite effectuées au cours de la vie du matériau, afin de suivre l'évolution de la microporosité.

Selon un exemple particulier d'application d'un dispositif suivant l'invention, on peut incorporer des capteurs dans un matériau tel que le plâtre, afin par exemple de détecter des variations d'humidité dans ce matériau

Une application à un tel matériau peut être utile notamment dans le domaine du bâtiment, ou dans le domaine médical, par exemple pour détecter des hémorragies sous un plâtre.

Selon une possibilité de mise en oeuvre, les capteurs peuvent être protégés et encapsulés par au moins une couche ou un revêtement de protection.

Avec une telle couche de protection, deux types de protection peuvent être mises en oeuvre : une protection pendant l'immersion des capteurs dans le matériau à étudier, et une protection pendant la durée de vie du capteur.

Une protection temporaire, en vue de la dispersion des capteurs dans le matériau à étudier peut être réalisée par exemple à l'aide d'un emballage épais susceptible d'être dégradé ultérieurement. Un tel emballage peut comprendre, par exemple, une ou plusieurs couches de polymères, par exemple de polyesters linéaires du type PET, susceptibles d'être hydrolysés lentement en milieu basique. Selon un autre exemple, un tel emballage peut être à base d'une résine photosensible.

Une protection prévue pendant la durée de vie du capteur peut être également mise en oeuvre. Une telle protection peut être formée d'un autre revêtement polymère tel qu'un polyester, par exemple résistant à un milieu basique ou par exemple du parylène.

Sur la figure 8, un capteur cMUT d'un dispositif suivant l'invention, est représenté avec une enveloppe protectrice encapsulant le capteur 100, l'enveloppe étant formée d'une première couche 710 de protection, qui peut être prévue pour recouvrir l'ensemble du capteur, ou l'ensemble du capteur à l'exception de sa zone active ou de ses zones actives, comportant par exemple une ou plusieurs membranes et une ou plusieurs cavités dans laquelle ou dans lesquelles, une membrane 405, ou plusieurs membranes 405 sont destinées à vibrer.

La première couche 710 de protection peut être permanente et prévue pour protéger le capteur pendant toute sa durée de vie. La première couche 710 de protection peut être par exemple à base de parylène.

La première couche 710 de protection peut être à base d'un matériau prévu pour résister à des attaques chimiques, en particulier à un milieu acide ou basique.

Par exemple, la première couche 710 de protection peut être à base d'un matériau stable à un pH de l'ordre de 12.

Le matériau choisi peut être un matériau compatible avec un procédé du type de ceux mis en oeuvre dans la microélectronique ou les micro-technologies.

Le matériau peut être par exemple du parylène, qui est chimiquement stable tant en milieu basique qu'acide, qui peut servir de protection contre l'humidité.

Dans le cas (représenté sur cette figure 8), où la zone sensible ou les zones sensibles du capteur ne sont pas protégées par la première couche 710 de protection, les zones sensibles peuvent alors avoir été soumises à des traitements pour les rendre hydrophile ou hydrophobe (comme cela est décrit dans la demande déposée par la Demanderesse et portant le numéro EN 08 57928).

Pour protéger d'attaques chimiques, certaines parties du capteur, proches ou directement voisines de la zone sensible ou des zones sensibles, par exemple tels qu'une ou plusieurs électrodes 407 d'actionnement ou de détection, on peut alors également encapsuler de façon permanente ces parties, à l'aide du même matériau que celui de la première couche 710 ou d'un autre matériau susceptible d'avoir les mêmes propriétés de résistance à des attaques chimiques.

La première couche 710 de protection peut avoir une épaisseur par exemple de l'ordre du micron ou du dixième de micron, en particulier dans un cas où le capteur est un capteur cMUT tel que décrit précédemment.

L'enveloppe est également formée d'une deuxième couche 720 de protection, recouvrant la première couche de protection 710 et la zone active ou les zones actives du capteur.

La deuxième couche 720 de protection est temporaire et est prévue pour protéger provisoirement le capteur pendant son implantation dans un matériau à étudier. La deuxième couche 720 de protection peut être destinée à être dégradée après cette implantation.

La deuxième couche 720 de protection peut être à base d'un matériau prévu pour être dégradé progressivement lorsque le capteur est placé dans un matériau à analyser.

La deuxième couche 720 de protection peut être à base d'un matériau prévu pour être dégradé progressivement par exemple lorsqu'il est placé dans un milieu acide ou basique.

La deuxième couche 720 de protection temporaire d'un matériau peut être par exemple un matériau de protection temporaire, soluble dans un milieu alcalin.

La deuxième couche 720 de protection temporaire peut être ainsi à base par exemple d'un matériau polymère dit « alcalino-soluble », par exemple un matériau tel que décrit dans le document : « Surface properties of an associative alkali soluble polymer (Acrysol TT-935) Colloids and Surfaces A: Physicochemical and Engineering Aspects », E. Hernàndez-Baltazar, G. A. Reyes-Sandoval, J. Gracia-Fadrique Volume 238, Issues 1-3, 4 May 2004, pages 113-122.

La deuxième couche 720 de protection temporaire est prévue pour résister pendant au moins un temps nécessaire à l'incorporation des capteurs dans un matériau et à la mise en oeuvre du dispositif de mesure.

La deuxième couche 720 de protection temporaire est notamment prévue pour protéger la zone sensible du capteur de chocs dus à des mouvements des différents constituants du matériau dans lequel on incorpore les capteurs, avant la prise définitive de ce matériau.

La couche 720 de protection temporaire est prévue pour pouvoir se dissoudre totalement, et est donc formée en termes de matériau utilisé, d'épaisseur, et éventuellement de la manière dont sa surface a été traitée, pour que la dissolution se produise principalement pendant les premières phases de solidification du matériau à analyser, et s'achève dès lors que le matériau comportant les capteurs est proche de sa prise définitive. Dans certains matériaux à prise particulièrement rapide, cette durée peut être par exemple de l'ordre d'une heure. Pour un matériau cimentaire la durée dépasse généralement 24 heures, une solidification complète pouvant prendre plusieurs jours.

Le matériau choisi pour réaliser la deuxième couche 720 de protection temporaire, peut être un matériau compatible avec un procédé du type de ceux mis en oeuvre dans la microélectronique ou les micro-technologies.

Ce matériau peut être par exemple à base de résine photosensible, telle qu'une résine positive, et formée de polymère alcalino-soluble, comme par exemple le DNQ-Novolac telle que décrite par exemple dans l'article : « Synthesis of alkali-soluble silicone resin suitable for resist material in microlithography », Hiroshi Ban, Akinobu Tanaka, Yoshio Kawai, Saburo Imamura, Polymer, Volume 31, Issue 3, March 1990, pages 564-568. On peut également utiliser une résine photosensible négative comme par exemple la résine SU-8®.

Pour une protection temporaire vis-à-vis de milieux alcalins, pour éviter une dissolution instantanée de la résine, on adapte la composition de la résine au degré d'alcalinité du milieu.

L'épaisseur de la deuxième couche 720 de protection temporaire, peut être comprise par exemple entre 1 µm et 100 µm.

Lorsqu'une couche de protection 720 relativement mince, par exemple d'épaisseur comprise entre 1 µm et 10 µm est mise en oeuvre, un durcissement en volume par exemple par un traitement thermique et/ou en surface par exemple à l'aide d'un plasma O₂ peut être effectué.

On peut rigidifier l'enveloppe protectrice temporaire 720. En particulier s'il est nécessaire pour une structure flexible par exemple une membrane d'éviter sa déformation et/ou son collage au fond d'une cavité. On peut par exemple utiliser de la gélatine pour rendre davantage rigide l'enveloppe protectrice temporaire 720.

Une méthode de rigidification à l'aide de gélatine, est présentée par exemple dans l'article : Photo-patternable gelatin as protection layers in low-temperature surface micromachinings, Lung-Jieh Yang, Wei-Zhi Lin, Tze-Jung Yao, Yu-Chong Tai, Sensors and Actuators A: Physical, Volume 103, Issues 1-2, 15 January 2003, Pages 284-290.

## Revendications

1. Dispositif d'analyse des micro-porosités d'un matériau donné, dont les pores ont une taille inférieure à 100 µm, comportant au moins deux phases, dont au moins une phase fluide, comprenant : une pluralité de capteurs (100) incorporés dans ledit matériau (M) donné,
les capteurs comprenant chacun un ou plusieurs transducteurs acoustiques et capacitifs cMUT dotés d'une ou plusieurs zones sensibles, destinées à vibrer, afin d'émettre et/ou recevoir des ondes acoustiques, les zones sensibles ayant une dimension critique, c'est-à-dire la plus petite dimension de ces zones sensibles hormis leur épaisseur, qui est comprise entre 1 nm et 100 µm, le dispositif comprenant en outre des moyens de traitement de signaux pour effectuer une analyse de signaux issus d'au moins un desdits capteurs afin d'analyser des microporosités du matériau.

2. Dispositif selon la revendication 1, dans lequel chaque capteur comprend au moins un transducteur cMUT récepteur d'onde acoustique et une pluralité de transducteurs cMUTs émetteurs incorporés dans ledit matériau donné, et destinés à émettre des ondes acoustiques.

3. Dispositif selon la revendication 2, dans lequel les transducteurs émetteurs émettent des impulsions acoustiques dans une gamme de fréquences comprise entre 20 kHz et 100 KHz ou entre 100 MHz et 10 GHz.

4. Dispositif selon l'une des revendications 1 à 3, dans lequel les transducteurs comportent au moins une membrane destinée à osciller, la membrane ayant une longueur et une largeur chacune inférieure à 100 µm.

5. Dispositif selon l'une des revendications 1 à 4, dans lequel les transducteurs comportent au moins une membrane destinée à osciller sous l'effet d'un champ électrique et/ou d'une onde acoustiques, la membrane étant formée d'une ou plusieurs couches de nanatubes et/ou de nano-fils et/ou de nano-poutres.

6. Dispositif selon l'une des revendications 1 à 5, comprenant en outre une pluralité de supports des capteurs incorporés dans ledit matériau donné, les capteurs reposant chacun sur un support (101) comportant au moins un circuit électronique (105) de traitement de signaux issus d'au moins un capteur.

7. Dispositif selon la revendication 6, dans lequel les supports desdits capteurs comprennent chacun une matrice de transducteurs cMUTs et/ou plusieurs capteurs de types différents.

8. Dispositif selon l'une des revendications 1 à 7, les capteurs comprenant une alimentation intégrée et/ou étant alimentés par l'intermédiaire de moyens alimentation extérieurs audit matériau.

9. Dispositif selon l'une des revendications 1 à 8, dans lequel les capteurs comprennent des moyens pour émettre des signaux vers l'extérieur du matériau, les moyens de traitement de données étant extérieurs au matériau et reliés aux capteurs par l'intermédiaire de liaisons RF et/ou filaires.

10. Dispositif selon l'une des revendications 1 à 9, au moins un capteur étant protégé par une enveloppe protectrice formée d'au moins une couche de protection permanente, stable en milieu basique ou acide.

11. Dispositif selon la revendication 10, dans lequel le capteur est doté d'au moins une zone dite « sensible » destinée à émettre et/ou recevoir des ondes acoustiques, ladite couche de protection permanente recouvrant partiellement ledit capteur de sorte qu'au moins ladite zone sensible n'est pas recouverte par la couche de protection permanente.

12. Dispositif selon l'une des revendications 10 ou 11, dans lequel ladite enveloppe protectrice est formée d'au moins une autre couche de protection temporaire, destinée à être dégradée progressivement après incorporation dans ledit matériau.

13. Procédé d'analyse de la microporosité d'un matériau donné dont les pores ont une taille inférieure à 100 µm et qui comporte au moins deux phases, dont au moins une phase fluide, en particulier cimentaire, en utilisant un dispositif selon l'une des revendications 1 à 12, ledit procédé comprenant les étapes de :
- émission par un ou plusieurs transducteurs acoustiques capacitifs cMUTS d'un dispositif selon l'une des revendications 1 à 12, les transducteurs étant incorporés dans ledit matériau donné d'au moins une onde acoustique donnée,
- réception par au moins un transducteur acoustique capacitif cMUT d'un dispositif selon l'une des revendications 1 à 12, le transducteur étant incorporé dans ledit matériau donné d'au moins une onde résultant de l'émission de la dite onde acoustique donnée,
- traitement de signaux issus d'au moins un desdits capteurs d'un dispositif selon l'une des revendications 1 à 12 afin d'analyser des micro-porosités du matériau.

14. Procédé selon la revendication 13, dans lequel préalablement à la mesure, les capteurs sont répartis aléatoirement dans ledit matériau donné lorsque ce dernier est dans un état au moins

15. Procédé selon la revendication 14, dans lequel, lorsque lesdits capteurs sont répartis dans le matériau lorsque ce dernier est dans un état au moins partiellement liquide, un ou plusieurs capteurs sont protégés par une enveloppe protectrice formée d'au moins une couche de protection permanente, ladite enveloppe protectrice étant formée d'au moins une autre couche de protection temporaire, destinée à être dégradée progressivement après incorporation dans ledit matériau donné.

## Patentansprüche

1. Vorrichtung zur Analyse der Mikroporositäten eines gegebenen Materials, dessen Poren eine Größe von weniger als 100 µm haben, umfassend wenigstens zwei Phasen, wovon wenigstens eine fluide Phase, umfassend: eine Mehrzahl von Sensoren (100), die in dem gegebenen Material (M) eingebettet sind,
wobei die Sensoren jeweils einen oder mehrere akustische und kapazitive cMUT-Wandler umfassen, die mit einer oder mehreren sensiblen Zonen ausgestattet sind, die dazu ausgelegt sind, zu vibrieren, um akustische Wellen auszusenden und/oder zu empfangen, wobei die kritische Abmessung oder kleinste Abmessung dieser sensiblen Zonen außer ihrer Dicke zwischen 1 nm und 100 µm enthalten ist, sowie Mittel zur Durchführung einer Analyse von Signalen, die von wenigstens einem Sensor stammen, um Mikroporositäten des Materials zu analysieren.

2. Vorrichtung nach Anspruch 1, bei der jeder Sensor wenigstens einen cMUT-Wandler als Empfänger einer akustischen Welle und eine Mehrzahl von cMUT-Wandlern als Sender umfasst, die in dem gegebenen Material eingebettet und dazu ausgelegt sind, akustische Wellen auszusenden.

3. Vorrichtung nach Anspruch 2, bei der die Sende-Wandler akustische Pulse in einem Frequenzbereich aussenden, der zwischen 20 kHz und 100 MHz oder zwischen 100 MHz und 10 GHz enthalten ist.

4. Vorrichtung nach einem der Ansprüche 1 bis 3, bei der die Wandler wenigstens eine Membran umfassen, die dazu ausgelegt ist, zu oszillieren, wobei die Membran eine Länge und eine Breite hat, die jeweils kleiner als 100 µm sind.

5. Vorrichtung nach einem der Ansprüche 1 bis 4, bei der die Wandler wenigstens eine Membran umfassen, die dazu ausgelegt ist, unter Einwirkung eines elektrischen Felds und/oder einer akustischen Welle zu oszillieren, wobei die Membran aus einer oder mehreren Schichten von Nanoröhrchen und/oder von Nanodrähten und/oder von Nanobalken gebildet ist.

6. Vorrichtung nach einem der Ansprüche 1 bis 5, ferner umfassend eine Mehrzahl von Trägern für die in dem gegebenen Material eingebetteten Sensoren, wobei die Sensoren jeweils auf einem Träger (101) ruhen, umfassend wenigstens eine elektronische Schaltung (105) zur Verarbeitung von Signalen, die von wenigstens einem Sensor stammen.

7. Vorrichtung nach Anspruch 6, bei der die Träger der Sensoren jeweils eine Matrix von Sensoren und/oder mehrere Sensoren von unterschiedlichen Typen umfassen.

8. Vorrichtung nach einem der Ansprüche 1 bis 7, wobei die Sensoren eine integrierte Versorgung umfassen und/oder mit Hilfe von Versorgungsmitteln außerhalb des Materials versorgt werden.

9. Vorrichtung nach einem der Ansprüche 1 bis 8, bei der die Sensoren Mittel zum Aussenden von Signalen nach außerhalb des Materials umfassen, wobei die Vorrichtung ferner eine Vorrichtung zur Verarbeitung von Daten außerhalb des Materials umfasst, die mit den Sensoren mittels RF- und/oder Draht-Verbindungen verbunden ist.

10. Vorrichtung nach einem der Ansprüche 1 bis 9, wobei wenigstens ein Sensor durch eine Schutzhülle geschützt ist, die durch wenigstens eine permanente Schutzschicht gebildet ist, welche im basischen oder sauren Milieu stabil ist.

11. Vorrichtung nach Anspruch 10, bei der der Sensor mit wenigstens einer sogenannten "sensiblen" Zone ausgestattet ist, die dazu ausgelegt ist, akustische Wellen auszusenden und/oder zu empfangen, wobei die permanente Schutzschicht den Sensor derart teilweise bedeckt, dass wenigstens die sensible Zone nicht durch die permanente Schutzschicht bedeckt ist.

12. Vorrichtung nach einem der Ansprüche 10 oder 11, bei der die Schutzhülle durch wenigstens eine weitere temporäre Schutzschicht gebildet ist, die dazu ausgelegt ist, sich nach Einbettung in das Material zunehmend abzubauen.

13. Verfahren zur Analyse der Mikroporosität eines gegebenen Materials, dessen Poren eine Größe kleiner als 100 µm haben, umfassend wenigstens zwei Phasen, wovon wenigstens eine fluide, insbesondere zementartige, Phase, das eine Vorrichtung nach einem der Ansprüche 1 bis 12 verwendet, wobei das Verfahren die folgenden Schritte umfasst:
- Aussendung wenigstens einer gegebenen akustischen Welle durch einen oder mehrere kapazitive akustische cMUT-Wandler einer Vorrichtung nach einem der Ansprüche 1 bis 11, wobei die Wandler in das gegebene Material eingebettet sind,
- Empfang wenigstens einer Welle, die aus der Aussendung der gegebenen akustischen Welle resultiert, durch wenigstens einen kapazitiven akustischen cMUT-Wandler einer Vorrichtung nach einem der Ansprüche 1 bis 12, wobei der Wandler in das gegebene Material eingebettet ist.

14. Verfahren nach Anspruch 13, bei dem die Sensoren vor der Messung zufällig in dem gegebenen Material verteilt werden, wenn Letztgenanntes in einem wenigstens teilweise flüssigen Zustand ist, wobei die Messung nach einer wenigstens teilweisen Aushärtung des gegebenen Materials durchgeführt wird.

15. Verfahren nach Anspruch 14, bei dem dann, wenn die Sensoren in dem Material verteilt werden, wenn Letztgenanntes in einem wenigstens teilweise flüssigen Zustand ist, ein oder mehrere Sensoren durch eine Schutzhülle geschützt werden, die durch wenigstens eine permanente Schutzschicht gebildet ist, wobei die Schutzhülle durch wenigstens eine weitere temporäre Schutzschicht gebildet ist, die dazu ausgelegt ist, nach Einbettung in das gegebene Material schrittweise abgebaut zu werden.

## Claims

1. A device for analyzing microporosities of a given material having pores that are smaller than 100 µm, the given material having two phases including at least a liquid phase, the device comprising:
Multiple sensors (100) incorporated in said given material (M),
Wherein each of said multiple sensors each include one or more capacitive micromachined ultrasonic transducers cMUT including one or more sensitive zones, the sensitive zones being configured to vibrate so as to emit and/or receive acoustic waves, the sensitive zones having a critical dimension, that is to say the smallest dimension of said sensitive zones except their thickness, that is between 1 nm and 100 µm, and the critical dimension of each one of the one or more sensitive zones is between 1 nm and 100 µm, the device further including signal processing means for analyzing signals from at least one of said sensors so as to analyze the material microporosities.

2. A device according to claim 1, in which each sensor includes at least one acoustic wave receiver cMUT transducer and multiple emitter cMUTs transducers incorporated in said given material, and intended to emit acoustic waves.

3. A device according to claim 2, in which the emitter transducers emit acoustic pulses in a range of frequencies of between 20 kHz and 100 MHz or between 100 MHz and 10 GHz.

4. A device according to one of the claims 1 to 3, in which the transducers include at least one membrane intended to oscillate, where the membrane has a length and a width each of which is less than 100 µm.

5. A device according to one of the claims 1 to 4, in which the transducers include at least one membrane intended to oscillate under the effect of an electric field and/or an acoustic wave, where the membrane is formed from one or more layers of nanotubes and/or nanowires and/or nanorods.

6. A device according to one of the claims 1 to 5, further including multiple supports of the sensors incorporated in said given material, where each of the sensors lies on a support (101) including at least one electronic circuit (105) for processing signals produced by at least one sensor.

7. A device according to claim 6, in which the supports of said sensors each include a matrix of cMUT transducer and/or several sensors of different types.

8. A device according to one of the claims 1 to 7, where the sensors include an integrated power source and/or are powered through a power source external to said material.

9. A device according to one of the claims 1 to 8, in which the sensors include means to emit signals to outside the material, where data-processing means are external to the material, and connected to the sensors through RF and/or wired connections.

10. A device according to one of the claims 1 to 9, where at least one sensor is protected by a protective casing formed from at least one permanent protective layer, which is stable in a basic or acidic medium.

11. A device according to claim 10, in which the sensor has at least one "sensitive" zone intended to emit and/or receive acoustic waves, where said permanent protective layer partially covers said sensor such that said sensitive zone, at least, is not covered by the permanent protective layer.

12. A device according to one of the claims 10 or 11, in which said protective casing is formed from at least one other temporary protective layer, intended to deteriorate gradually after incorporation in said material.

13. A method for analysis of the microporosity of a given material, in particular a cement material, the given material having pores that are smaller than 100 µm and that includes at least two phases including at least a liquid phase, by using a device as claimed in one off the claims 1 to 12, the method including the following steps:
- emission by one or more cMUTS capacitive acoustic transducers of a device according to one of the claims 1 to 11, where said transducers are incorporated in said given material, of at least one given acoustic wave,
- reception by at least one cMUT capacitive acoustic transducer of a device according to one of the claims 1 to 12, where the transducer is incorporated in said given material, of at least one wave resulting from the emission of said given acoustic wave,
- analyzing signals from at least one of said sensors of a device according to any of the claims 1 to 12 so as to analyze the material microporosities.

14. A method according to claim 13, in which prior to the measurement the sensors are distributed randomly in said given material when the latter is in an at least partially liquid state, and where the measurement is made after at least partial solidification of said given material.

15. A method according to claim 14, in which, when said sensors are distributed in the material when the latter is in an at least partially liquid state, one or more sensors are protected by a protective casing formed from at least one permanent protective layer, where said protective casing is formed from at least one other temporary protective layer, intended to deteriorate gradually after incorporation in said given material.
